# EUROPEAN PATENT APPLICATION

(11) **EP 4 696 400 A1**
(43) Date of publication of application: **18.02.2026**
(21) Application number: 24195072.4
(22) Date of filing: 16.08.2024
(51) Int. Cl.: B01D 53/04

(54) **TEMPERATURE-SWING ADSORBER UNIT AND USES THEREOF, ESPECIALLY FOR MOBILE APPLICATIONS**

(71) Applicant: Qaptis Sàrl, 1015 Lausanne (CH)
(72) Inventor: GREEN, Edward, OAkdale, PA 15071 (US)
(74) Representative: ABREMA SA

(57) **Abstract**

There is described a temperature-swing adsorber unit (TSA) comprising a plurality of container bodies (CB) filled with sorbent material (SP) and extending essentially in a vertical direction, each container body (CB) being configured to be flowed through by a gas to be treated during an adsorption cycle of the temperature-swing adsorber unit (TSA). The container bodies (CB) are stacked side by side, with a vent plate structure (VT) being interposed between adjacent pairs of container bodies (CB). Each vent plate structure (VT) is configured to channel a hot heat transfer gas therethrough to act as heat exchanger structure (HEX) and transfer heat to the sorbent material (SP) during a desorption cycle of the temperature-swing adsorber unit (TSA).

## Description

### TECHNICAL FIELD

The present invention generally relates to a temperature-swing adsorber (TSA) unit for mobile applications, especially for carbon dioxide capture applications.

### BACKGROUND OF THE INVENTION

A TSA unit in essence consists of a vessel that contains sorbent material, such as sorbent particles or pellets, that is used e.g. for gas separation. When the sorbent material is cold, it adsorbs or captures gas molecules of a select size. When the sorbent material is warmed, the captured gas is desorbed or released. This phenomenon is especially used to separate gaseous compounds such as water from air or carbon dioxide (CO₂) from exhaust gases.

TSA vessels are generally cylindrically shaped with the main axis thereof being oriented in the vertical direction, and the gas to be treated is caused to flow vertically through the sorbent material, either upwards or downwards, during an adsorption cycle. When the sorbent material is saturated with the desired captured gaseous compound, the stream of gas to be treated is interrupted and the TSA unit is switched to a desorption cycle during which the sorbent material is warmed to cause desorption and release of the adsorbed gaseous compound, e.g. for storage.

Heating sorbent particles or pellets is difficult because they typically have small contact areas between them and therefore have low thermal conduction between pellets. The temperatures are furthermore low enough that radiation between particles is low. Convection heating is therefore the main source of heat transfer through the particles, and it is mostly low convection value as the velocity between the particles is very low. This low heat transfer through the sorbent pellets affects the cycle time of the TSA unit. The cycle time can be reduced and the size/volume of the TSA unit can be reduced by improving the heat transfer in the sorbent bed.

The warming and cooling of the sorbent pellets is accomplished by either direct or indirect heating and cooling. The direct method of heating and cooling typically involves sending a relatively cool gaseous mixture through the TSA unit to cause separation of the desired compound contained in the gaseous mixture by adsorption onto the sorbent material. Once the adsorption cycle is finished, a stream of hot purge gas is typically sent through the TSA unit in direct contact with the sorbent material to drive the desorption process. This stream of hot purge gas increases the temperature of the sorbent material which releases the captured compound. In such case, the purge gas and captured compound released during the desorption process are mixed because they are in direct contact. A cold purge gas is then sent through the adsorber unit to reduce the temperature of the sorbent material before switching back to the adsorption cycle. In some instances, mixing the purge gas and the captured compound is acceptable. Especially, if the captured compound is separated in order to purify the stream of gaseous mixture, and that separated compound can just be disposed of, then mixing a purge gas with the separated compound is acceptable. However, if the separated compound is removed to recover a high-purity separated compound (such as in the case of carbon dioxide capture), mixing purge gas with the separated compound would defeat the very purpose of the separation by diluting the purity of the captured gas.

Indirect heating and cooling of the sorbent material is accomplished using a sealed heat exchanger to separate the heat transfer fluid (be it a cooling or heating fluid) from the captured compound. This allows the captured compound to retain a high purity. The heat transfer fluid may be a liquid or gas. Any liquid heat transfer fluid requires additional components such as a pump, filter, storage tank, and cooling system, such as a radiator, making the whole system larger, heavier and more expensive. For carbon dioxide capture for mobile applications, such as in vehicles, weight and cost of the overall system are of critical importance, even more than system efficiency.

The use of gaseous heat transfer fluids to heat or cool TSA units is typically regards as being relatively inefficient as large volumes of air or gases are required and waste heat out of the TSA heat exchanger is generally difficult to recover efficiently. Additionally, gas heat exchangers are often larger as they require more surface area on the gas side than liquid heat exchangers.

The most common method of indirect heating is to wrap a heat exchanger jacket around the outside of the TSA vessel containing the sorbent material. The drawback of this solution is that it takes a long time for heat to penetrate from the outer portion of e.g. a cylindrical vessel and reach the center thereof. As a result, the desorption cycle for this type of TSA unit can be very long, often 12 to 24 hours. For long desorption cycles, the adsorption cycle will also be long. This typically requires the TSA unit to contain a very large volume of sorbent material which drives up the cost as well as volume, weight and cost of the system.

Another type of indirect particle heat exchanger is a coiled tube submerged within the sorbent material with the axis of the coil oriented vertically. This style of heat exchanger resembles a hollow spring and often has multiple coils nested together. The drawback of this solution is that gravity pulls/settles the sorbent pellets downwards away from the lower half of the horizontal coiled tube sections. In other words, only the top half of the horizontal coiled tube sections is typically in direct contact with the sorbent pellets. Thermal conduction surface area is therefore cut in two and the convective distance between the sorbent pellets and coiled tube becomes large. The result is significantly reduced heat transfer and poor performance.

Sometimes shell-and-tube heat exchangers are oriented in the vertical direction and the sorbent pellets are inserted inside the tubes. One drawback of this solution resides in the fact that the diameter of the tubes is required to be large to get enough cross-sectional area to minimize the pressure drop of the treated gas. The large tubes also create large spaces, which drive the size/diameter of the heat exchanger up, which in turn drives the cost up. Furthermore, the many vertical tubes are tied to a single plate called a tube sheet. The differential temperature between heating and cooling on a fixed plate shell and tubed exchanger is typically limited to approximately 55°C due to thermal stress considerations. A TSA unit for carbon dioxide capture requires a much higher differential temperature to work. There are various methods to allow for thermal expansion, but they add considerable expense and complexity to the TSA unit.

Capturing and separating carbon dioxide (CO₂) from exhaust gases of vehicles is a growing concern. Using a TSA unit to capture the CO₂ is one method for doing so. For practical applications, the temperature-swing adsorber must therefore be small enough to fit on a vehicle and be as much as possible lightweight to minimize impact on fuel efficiency.

There therefore remains a need for an improved TSA unit that can efficiently exploit waste heat from exhaust gas produced by an internal combustion engine as heat transfer fluid to drive the desorption process.

### SUMMARY OF THE INVENTION

A general aim of the invention is to provide a temperature-swing adsorber (TSA) unit that obviates the shortcomings and limitations of the known solutions of the prior art.

More specifically, an aim of the present invention is to provide such a TSA unit that can efficiently exploit a heat transfer gas, especially hot exhaust gas, as heating fluid for the purpose of sustaining desorption.

A further aim of the invention is to provide such a solution that is particularly suited for the purpose of processing exhaust gases from internal combustion engines.

These aims, and others, are achieved thanks to the solutions defined in the claims.

There is accordingly provided a temperature-swing adsorber unit, the features of which are recited in claim 1, namely such a temperature-swing adsorber unit comprising a plurality of container bodies filled with sorbent material and extending essentially in a vertical direction, each container body being configured to be flowed through by a gas to be treated during an adsorption cycle of the temperature-swing adsorber unit. The container bodies are stacked side by side, with a vent plate structure being interposed between adjacent pairs of container bodies, each vent plate structure being configured to channel a hot heat transfer gas therethrough to act as heat exchanger structure and transfer heat to the sorbent material during a desorption cycle of the temperature-swing adsorber unit.

By way of preference, the sorbent material consists of sorbent pellets that are packed inside the container bodies.

The container bodies may in particular exhibit an essentially parallelepipedic shape. In this latter case, and assuming the sorbent material consists of sorbent pellets that are packed inside the container bodies, a width of each container body, transversely to the vent plate structure, is advantageously comprised between 5 and 20 times a nominal diameter of the sorbent pellets.

A lower end of each container body is preferably provided with a grid or perforated structure configured to retain the sorbent material within the container body and allow circulation of gas therethrough.

By way of preference, a width of each vent plate structure, transversely to the vent plate structure, is comprised between 2 and 8 millimetres.

Each vent plate structure preferably includes a plurality of baffles or turning vanes to channel and guide air flow through the vent plate structure.

Each vent plate structure may furthermore be structured to channel and guide the heat transfer gas from a gas inlet to a gas outlet that are located along a side of the temperature-swing adsorber unit. This configuration is particularly advantageous in that routing of the heat transfer fluid through the vent plate structures does not impede routing of gas through the sorbent material contained in the container bodies.

The container bodies and vent plate structures may be joined together by any adequate techniques, including welding, bolting or riveting.

Also claimed is the use of the temperature-swing adsorber unit of the invention for water capture or carbon dioxide capture, especially from exhaust gas outputted by an internal combustion engine. In this latter case, hot exhaust gas outputted by the internal combustion engine may especially be exploited as heating fluid and caused to flow through the vent plate structures during the desorption cycle of the temperature-swing adsorber unit. Additionally, cold exhaust gas may further be exploited as cooling fluid and caused to flow through the vent plate structures during the adsorption cycle of the temperature-swing adsorber unit.

There is also provided a carbon dioxide capture system comprising at least one temperature-swing adsorber unit according to the invention for capturing carbon dioxide contained in exhaust gas produced by an internal combustion engine.

There is also claimed a vehicle equipped with an on-board carbon dioxide capture system including at least one temperature-swing adsorber unit in accordance with the invention for carbon dioxide capture from exhaust gas outputted by an internal combustion engine of the vehicle.

Further advantageous embodiments of the invention are discussed below.

### BRIEF DESCRIPTION OF THE DRAWINGS

Other features and advantages of the present invention will appear more clearly from reading the following detailed description of embodiments of the invention which are presented solely by way of non-restrictive examples and illustrated by the attached drawings in which:
Figure 1 schematically shows a cross-section of a temperature-swing adsorber (TSA) unit in accordance with a preferred embodiment of the invention, as shown from a side, the TSA unit comprising a plurality of essentially parallelepipedic container bodies filled with sorbent pellets, which container bodies are stacked side by side with a vent plate structure being interposed being adjacent pairs of container bodies;
Figure 2 schematically shows a top view of the TSA unit of Figure 1;
Figure 3 is a schematic cross-section of the TSA unit of Figures 1 and 2 taken along a vertical plane A-A coinciding with one of the vent plate structures of the TSA unit, as indicated in Figures 1 and 2;
Figure 4 is a perspective view of a TSA unit in accordance with the configuration shows in Figures 1 to 3;
Figure 5 is a schematic diagram of a carbon dioxide capture system (CCS) embodying a temperature-swing adsorption system (TSAS) comprising at least one temperature-swing adsorber unit in accordance with the invention for capturing water and carbon dioxide from exhaust gas outputted by an internal combustion engine; and
Figure 6 is a schematic diagram of a vehicle equipped with an on-board carbon dioxide capture system (CCS) including a temperature-swing adsorption system (TSAS) comprising at least one temperature-swing adsorber unit (TSA) in accordance with the invention.

### DETAILED DESCRIPTION OF EMBODIMENTS OF THE INVENTION

The present invention will be described in relation to various illustrative embodiments. It shall be understood that the scope of the invention encompasses all combinations and sub-combinations of the features of the embodiments disclosed herein as defined by the appended claims.

The invention will be described in the particular context of a temperature-swing adsorber (TSA) unit used for carbon dioxide capture, in particular from exhaust gas outputted by an internal combustion engine of a vehicle. It will be appreciated however that the temperature-swing adsorber unit may be used for other purposes, including e.g. as dryer, with a view to capture and extract water from the exhaust gas.

The adsorber unit could potentially be supplemented by the additional provision of a vacuum pump for operation as a temperature-vacuum swing adsorber (TVSA) unit with a view to improve recovery efficiency. Vacuum coupled with heat is indeed significantly more efficient than heat alone for desorption recovery of gas. In other words, when reference is made herein to temperature-swing adsorption (TSA), this should generally be understood as encompassing temperature-vacuum swing adsorption (TVSA) as a possible embodiment.

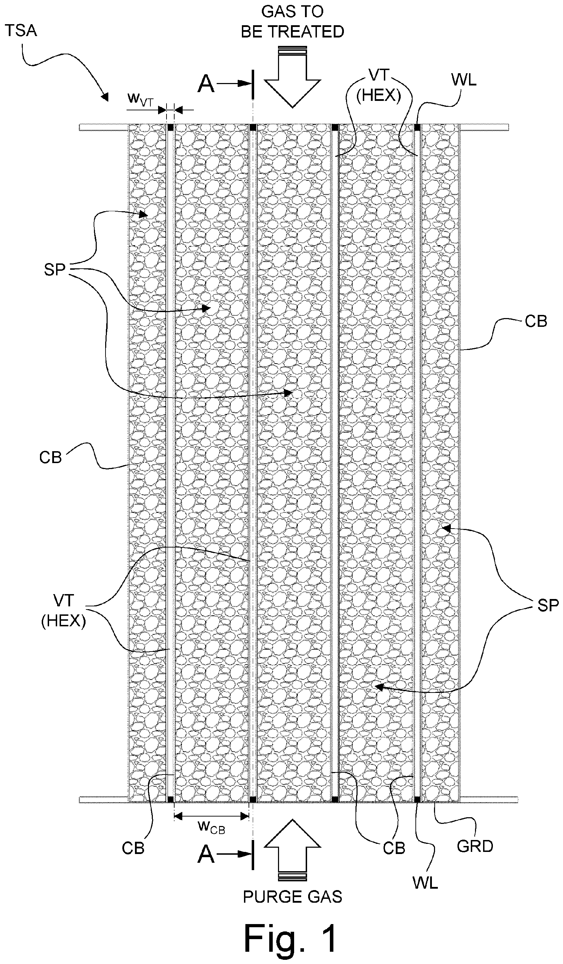

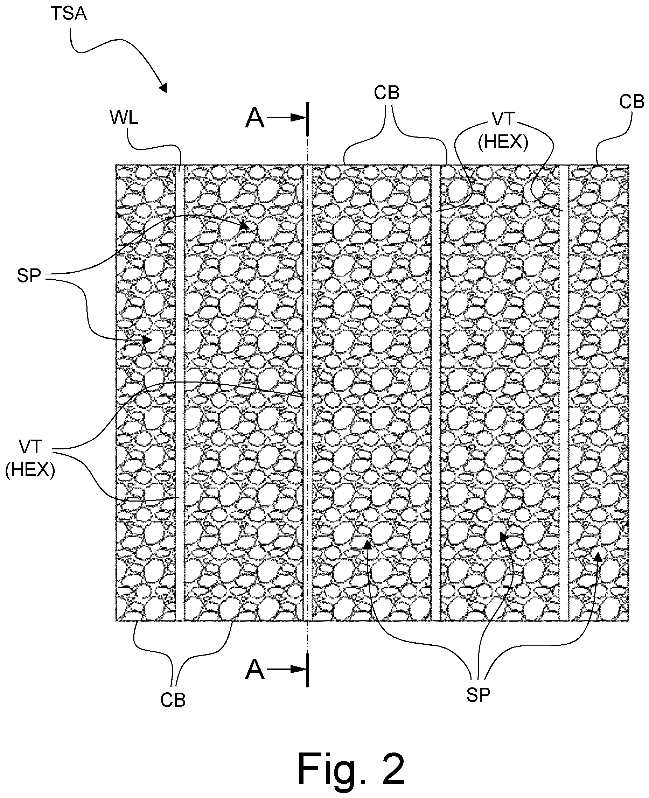

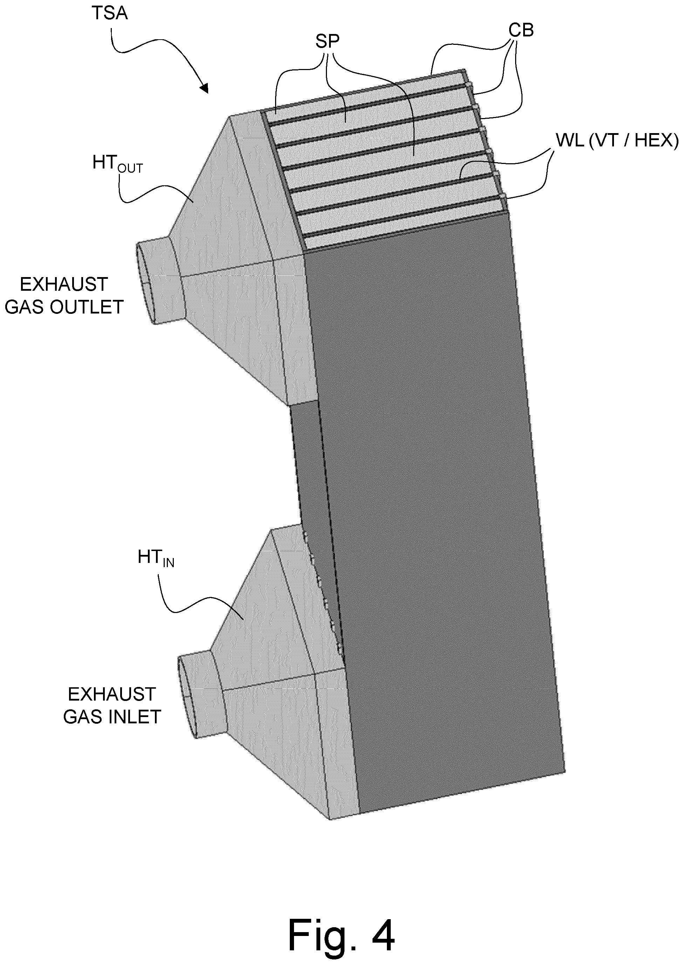

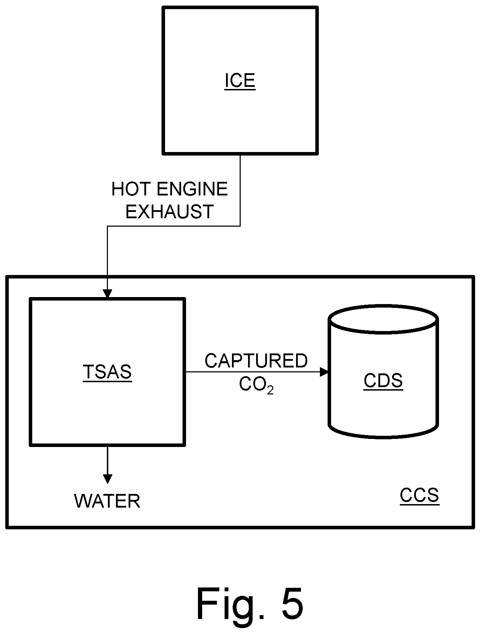

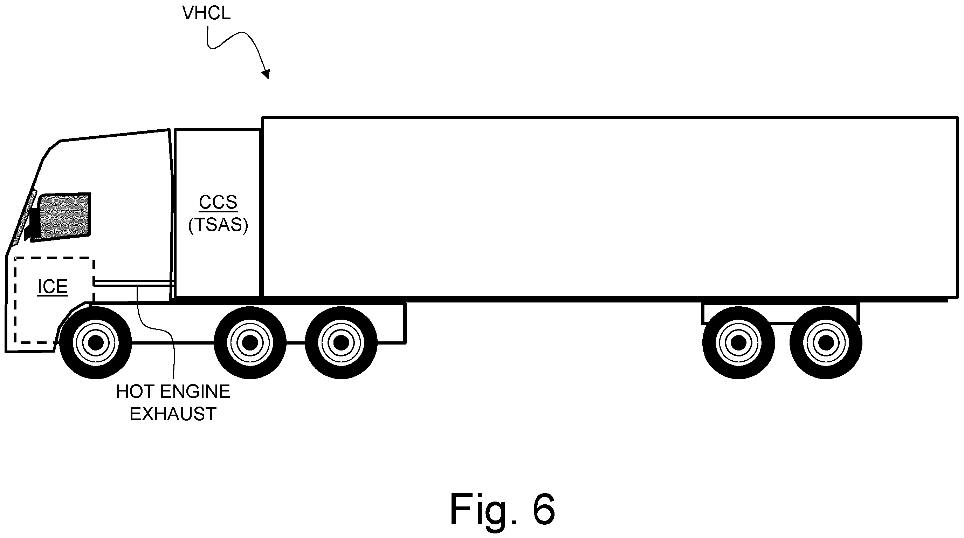

Figures 1 to 4 are illustrative of an exemplary temperature-swing adsorber unit, designated globally by reference sign TSA, according to a particularly preferred embodiment of the invention. The temperature-swing adsorber unit TSA comprises a plurality of container bodies CB each filled with sorbent material SP and extending essentially in a vertical direction. In Figures 1 and 2, five container bodies CB are schematically shown, while Figure 4 shows an embodiment comprising seven such container bodies CB. The number of container bodies CB may be adapted depending on the application and/or requirements. Each container body CB is configured to be flowed through by a gas to be treated, such as exhaust gas outputted by an internal combustion engine ICE of a vehicle VHCL (see e.g. Figures 5 and 6), during an adsorption cycle of the temperature-swing adsorber unit TSA.

As schematically shown in Figure 1, the gas to be treated may advantageously be fed from the top of the temperature-swing adsorber unit TSA end exit from the bottom thereof. In other embodiments, the flow of gas may however be reversed. Optionally, during a desorption cycle of the temperature-swing adsorber unit TSA, purge gas may be routed through the container bodies CB and the sorbent material SP contained therein, for instance from the bottom end of the adsorber unit TSA, to assist the desorption process. Use of a purge gas during desorption is not however required, or - in certain cases - may not be desirable at all. When a purge gas is not used, a vacuum pump may be employed to assist desorption of the captured compound. The use of a vacuum pump ensures improved desorption efficiency and avoids diluting the purity of the captured compound.

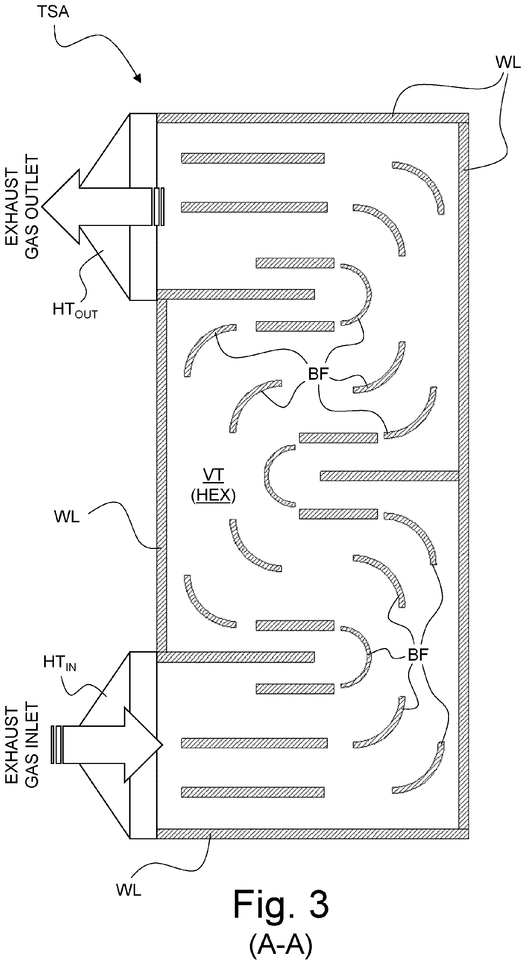

As shown in Figures 1 to 4, the container bodies CB are stacked side by side, with a vent plate structure VT being interposed between adjacent pairs of container bodies CB. Each vent plate structure VT is configured to channel a hot heat transfer gas therethrough (in particular hot engine exhaust gas) to act as heat exchanger structure HEX and transfer heat to the sorbent material SP during a desorption cycle of the temperature-swing adsorber unit TSA. A preferred, but non-limiting example of a possible configuration of the vent plate structure VT is shown in Figure 3.

The sorbent material preferably consists of sorbent pellets SP that are packed inside the container bodies CB. In that context, especially, a lower end of each container body CB is advantageously provided with a grid or perforated structure GRD, as schematically shown in Figure 1, configured to retain the sorbent material SP within the container body CB, while allowing circulation of gas therethrough.

The sorbent pellets SP may especially be capable of capturing carbon dioxide contained in the exhaust gas. The sorbent pellets SP may in particular be porous ceramic sorbent pellets with high CO₂ sorption capacity, as known as such in the art. The sorbent pellets SP may for instance be made of lithium orthosilicate (Li₄SiO₄) or zeolite (such as zeolite 13X or 5A), which are of primary interest for carbon dioxide capture. In the event the temperature-swing adsorber unit TSA is used as dryer to capture and extract water compounds from the gaseous mixture, the sorbent pellets SP may e.g. be made of activated alumina, which is widely used as desiccant, silica gel (such as Sorbead^{®} from BASF Catalysts Germany GmbH) or zeolite (such as zeolite 3A).

The size of the sorbent pellets SP may vary depending on the applications. By way of illustration, the sorbent pellets SP may have a nominal diameter of 1/8^{th} of an inch (approximately 3.2 mm). Smaller or larger pellet sizes could however be contemplated.

By way of preference, the container bodies CB each exhibit an essentially parallelepipedic shape, with a width w_{CB} thereof, transversely to the vent plate structure VT, being preferentially comprises between 5 and 20 times a nominal diameter D_{SP} of the sorbent pellets SP. As may be appreciated from looking at Figures 1, 2 and 4, the container bodies CB on the outer sides of the temperature-swing adsorber unit TSA preferably exhibit a smaller width than that of the centrally-located container bodies CB (namely approximately half the width) as thermal transfer with the adjacent vent plate structure VT is comparatively reduced.

A width w_{VT} of each vent plate structure VT, transversely to the vent plate structure VT, may be selected to be comprised between 2 and 8 millimetres to ensure optimal heat transfer efficiency.

Referring more specifically to the cross-section of Figure 3, each vent plate structure VT advantageously includes a plurality of baffles or turning vanes BF to channel and guide air flow through the vent plate structure VT. Even more preferably (see also Figure 4), each vent plate structure VT is structured to channel and guide the heat transfer gas from a gas inlet HT_{IN} to a gas outlet HT_{OUT} that are located along a side of the temperature-swing adsorber unit TSA. Each vent plate structure VT is furthermore sealed by wall sections WL to ensure adequate containment and circulation of the heat transfer fluid through the vent plate structure VT. The aforementioned baffles or turning vanes BF also increase contact surface area with the heat transfer fluid to improve heat transfer.

Provision of the gas inlet HT_{IN} and gas outlet HT_{OUT} along the side of the temperature-swing adsorber unit TSA is advantageous in that such arrangement does not impede routing of gas through the sorbent material SP contained in the container bodies CB.

The container bodies CB and vent plate structures VT may be joined together by any adequate techniques, including welding, bolting or riveting, which provides flexibility in scaling and adaptation of the temperature-swing adsorber unit TSA to practical requirements.

The temperature-swing adsorber unit of the invention may in particular be used for water capture or carbon dioxide capture, especially from exhaust gas outputted by an internal combustion engine ICE of a vehicle VHCL such as a truck (as shown in Figure 6), a naval ship, an agricultural vehicle, or the like. This being side, standalone, stationary applications are also possible.

Figure 5 is a schematic functional depiction of a carbon dioxide capture system CCS for capture and storage of carbon dioxide from exhaust gas outputted by an internal combustion engine ICE (such as the engine of a truck VHCL as shown in Figure 6). As shown schematically in Figure 5, the carbon dioxide capture system CCS includes a temperature-swing adsorption system TSAS (comprising at least one temperature-swing adsorber unit according to the invention) to process hot engine exhaust gas outputted by the internal combustion engine ICE and capture carbon dioxide (CO₂) for storage in at least one storage device CDS. The temperature-swing adsorption system TSAS may be further configured to process the exhaust gas to remove water therefrom, which can be released into the environment, or potentially recovered or used for other purposes.

In the context of Figure 5, hot engine exhaust gas produced by the internal combustion engine may advantageously be exploited as heating fluid and be routed through the aforementioned vent plate structures VT, during a desorption cycle of the temperature-swing adsorber unit TSA, to adequately heat the sorbent material SP and thereby sustain desorption. Additionally, the exhaust gas can be cooled and used as cooling fluid and likewise be routed through the vent plate structures VT, during an adsorption cycle of the temperature-swing adsorber unit TSA, to adequately cool the sorbent material SP and thereby sustain adsorption.

The temperature-swing adsorber unit of the invention could especially be applied in the context of the invention that separately forms the subject-matter of European patent application No. 24195071.6 of August 16th, 2024, titled "METHOD AND SYSTEM FOR CAPTURING CARBON DIOXIDE FROM ENGINE EXHAUST GAS, IN PARTICULAR FOR APPLICATION IN VEHICLES", also in the name of the present Applicant.

Various modifications and/or improvements may be made to the above-described embodiments without departing from the scope of the invention as defined by the appended claims.

For instance, while sorbent pellets are preferably used as sorbent material, the sorbent material could consist of any other porous, sorbent structure adequately filling the container bodies.

Furthermore, for applications that demand recovery of a high-purity captured compound, at least one vacuum pump could be used to pull the captured compound during desorption instead of using a purge gas.

### LIST OF REFERENCE NUMERALS AND SIGNS USED THEREIN

- TSA: temperature-swing adsorber unit
- CB: container bodies filled with sorbent material SP
- w_{CB}: width of container body CB (transversely to vent plate structure VT)
- SP: sorbent material (e.g. sorbent pellets)
- D_{SP}: nominal diameter of sorbent pellets SP
- VT: vent plate structure acting as heat exchanger structure HEX interposed between pairs of adjacent container bodies CB
- w_{VT}: width of vent plate structure VT (transversely to vent plate structure VT)
- HEX: heat exchange structure
- GRD: gird/perforated structure provided at the bottom of each container body CB
- BF: baffles/turning vanes
- WL: wall sections of vent plate structure VT for containment of heat transfer fluid
- HT_{IN}: exhaust gas inlet of vent plate structure VT
- HT_{OUT}: exhaust gas outlet of vent plate structure VT
- ICE: internal combustion engine
- CCS: carbon dioxide capture system
- TSAS: temperature-swing adsorption system
- CDS: carbon dioxide storage device
- VHCL: vehicle with on-board carbon dioxide capture system CCS (e.g. truck, naval ship, agricultural vehicle, etc.)

## Claims

1. A temperature-swing adsorber unit (TSA) comprising a plurality of container bodies (CB) filled with sorbent material (SP) and extending essentially in a vertical direction,
each container body (CB) being configured to be flowed through by a gas to be treated, during an adsorption cycle of the temperature-swing adsorber unit (TSA),
wherein the container bodies (CB) are stacked side by side, with a vent plate structure (VT) being interposed between adjacent pairs of container bodies (CB),
and wherein each vent plate structure (VT) is configured to channel a hot heat transfer gas therethrough to act as heat exchanger structure (HEX) and transfer heat to the sorbent material (SP) during a desorption cycle of the temperature-swing adsorber unit (TSA).

2. The temperature-swing adsorber unit (TSA) according to claim 1, wherein the sorbent material consists of sorbent pellets (SP) that are packed inside the container bodies (CB).

3. The temperature-swing adsorber unit (TSA) according to claim 1 or 2, wherein the container bodies (CB) each exhibit an essentially parallelepipedic shape.

4. The temperature-swing adsorber unit (TSA) according to claim 2, wherein the container bodies (CB) each exhibit an essentially parallelepipedic shape,
and wherein a width (w_{CB}) of each container body (CB), transversely to the vent plate structure (VT), is comprised between 5 and 20 times a nominal diameter (D_{SP}) of the sorbent pellets (SP).

5. The temperature-swing adsorber unit (TSA) according to any one of the preceding claims, wherein a lower end of each container body (CB) is provided with a grid or perforated structure (GRD) configured to retain the sorbent material (SP) within the container body (CB) and allow circulation of gas therethrough.

6. The temperature-swing adsorber unit (TSA) according to any one of the preceding claims, wherein a width (w_{VT}) of each vent plate structure (VT), transversely to the vent plate structure (VT), is comprised between 2 and 8 millimetres.

7. The temperature-swing adsorber unit (TSA) according to any one of the preceding claims, wherein each vent plate structure (VT) includes a plurality of baffles or turning vanes (BF) to channel and guide air flow through the vent plate structure (VT).

8. The temperature-swing adsorber unit (TSA) according to any one of the preceding claims, wherein each vent plate structure (VT) is structured to channel and guide the heat transfer gas from a gas inlet (HT_{IN}) to a gas outlet (HT_{OUT}) that are located along a side of the temperature-swing adsorber unit (TSA).

9. The temperature-swing adsorber unit (TSA) according to any one of the preceding claims, wherein the container bodies (CB) and vent plate structures (VT) are joined together by welding, bolting or riveting.

10. Use of the temperature-swing adsorber unit (TSA) of any one of the preceding claims for water capture or carbon dioxide capture.

11. Use according to claim 10 for water capture or carbon dioxide capture from exhaust gas outputted by an internal combustion engine (ICE).

12. Use according to claim 11, wherein hot exhaust gas outputted by the internal combustion engine (ICE) is exploited as heating fluid and caused to flow through the vent plate structures (VT) during the desorption cycle of the temperature-swing adsorber unit (TSA).

13. Use according to claim 12, wherein cold exhaust gas is exploited as cooling fluid and caused to flow through the vent plate structures (VT) during the adsorption cycle of the temperature-swing adsorber unit (TSA).

14. A carbon dioxide capture system (CCS) comprising at least one temperature-swing adsorber unit (TSA) according to any one of claims 1 to 9 for capturing carbon dioxide contained in exhaust gas produced by an internal combustion engine (ICE).

15. A vehicle (VHCL) equipped with an on-board carbon dioxide capture system (CCS) including at least one temperature-swing adsorber unit (TSA) in accordance with any one of claims 1 to 9 for carbon dioxide capture from exhaust gas outputted by an internal combustion engine (ICE) of the vehicle (VHCL).
